# EUROPEAN PATENT APPLICATION

(11) **EP 4 331 839 A1**
(43) Date of publication of application: **06.03.2024**
(21) Application number: 23765132.8
(22) Date of filing: 01.06.2023
(51) Int. Cl.: B32B 27/32

(54) **LONG-ACTING HUMIDITY CONTROL MATERIAL FOR BATTERY PACK AND PREPARATION METHOD THEREFOR**

(30) Priority: 18.07.2022 CN 202210839791
(71) Applicant: Ningbo Booer New Material Co., Ltd, Fenghua District Ningbo, Zhejiang 315000 (CN)
(72) Inventor: DING, Kai, Ningbo Zhejiang 315000 (CN); SHI, Xiaoli, Ningbo Zhejiang 315000 (CN); XU, Yingfei, Ningbo Zhejiang 315000 (CN)
(74) Representative: Huang, Liwei
(86) International application number: PCT/CN2023/097674
(87) International publication number: WO 2024/016854

(57) **Abstract**

The present invention relates to the field of humidity-control materials, and in particular, to a long-acting humidity-control material for battery packs and a method for preparing same. The material comprises an upper packaging layer, a humidity-control layer, and a lower packaging layer. The humidity-control layer consists of a polyester fiber as a substrate and a modified humidity-control macromolecular coating. The prepared humidity-control material can achieve long-acting and long-distance control of humidity in the battery packs of vehicles and thereby avoid the moisture condensation in the battery packs, thus improving the operation safety and reliability of new energy vehicles.

## Description

### CROSS-REFERENCE TO RELATED APPLICATIONS

The present application claims the priority to Chinese Patent Application No. 202210839791.1, filed in China on July 18, 2022, which is incorporated herein by reference in its entirety.

### TECHNICAL FIELD

The present invention relates to the field of humidity-control materials, and in particular, to a long-acting humidity-control material for battery packs and a method for preparing same.

### BACKGROUND

Conventional humidity-control materials include natural humidity-control materials, organic macromolecular humidity-control materials, inorganic mineral humidity-control materials, and the like. Natural and inorganic mineral humidity-control materials generally possess unstable moisture absorption and desorption performance and poor humidity-control effect, while organic macromolecular humidity-control materials usually feature complicated preparation, low cost-efficiency, and difficulties in scale-up. In addition, the moisture absorption performance is the major evaluation index for existing humidity-control materials, but an effective control method for stably releasing absorbed moisture is absent. Some products may also release toxic and harmful substances such as formaldehyde and the like, which easily cause contamination.

HCCF is an environment-friendly material formed by mixing a microporous macromolecular water-absorbing polymer in a fiber material. HCCF is different from conventional granular or powdery desiccant products in that it can automatically achieve bidirectional reversible moisture absorption and release in a relatively closed environment and can efficiently control the humidity in the environment and inhibit the production of mist and condensation. The unique moisture absorption fiber framework of HCCF serves as the water delivery pipeline and ensures the bidirectional reversibility of HCCF for moisture absorption and release by the reservoir effect formed by coordination with the microporous material.

Generally, in an environment with relatively higher air humidity, the sudden drop of the internal temperature when a new energy vehicle stops or the internal cooling system of the vehicle is started, condensation may occur in the battery packs of the vehicle. Due to the presence of electric components in the battery packs, the risk of electrical short circuits is greatly elevated by condensation, which may even lead to combustion or explosion accidents in severe cases. When the air humidity in the environment is low, the battery packs may operate at a high temperature in a dry condition for a long time, which increases the risk of failure of heat control. Accordingly, the application of HCCF to control the humidity change in the battery packs for preventing condensation has wide market prospects. However, existing HCCF materials have a limited humidity-control range, and how to achieve long-distance and long-term humidity control is one of the technical problems to be solved urgently for HCCF.

### SUMMARY

The present invention provides a long-acting humidity-control material for battery packs and a method for preparing same, which are intended to solve the technical problem that the existing HCCF material is difficult to achieve long-distance and long-acting humidity control in the prior art.

The present invention solves the above problem by the following technical schemes:
A long-acting humidity-control material for battery packs is provided, comprising an upper packaging layer, a humidity-control layer, and a lower packaging layer.

Furthermore, the upper packaging layer is a waterproof air-permeable film layer, and the waterproof air-permeable film layer is a hydrophobic expanded polytetrafluoroethylene film.

Furthermore, the humidity-control layer consists of 1-5 layers of humidity-control sheets, the humidity-control sheet consists of a substrate and a modified humidity-control macromolecular coating, and the substrate is a polyester fiber.

Furthermore, the modified humidity-control macromolecular coating is prepared from, in part by weight: 3-10 parts of a modified superabsorbent polymer, 15-25 parts of a potassium salt, 5-10 parts of a chloride, and 30-50 parts of a solvent.

Furthermore, the potassium salt is one, two, or more selected from potassium carbonate and potassium bromide.

Furthermore, the chloride is one, two, or more selected from sodium chloride, magnesium chloride, and calcium chloride.

Furthermore, the solvent is one, two, or more selected from deionized water and glycol.

Furthermore, the upper packaging layer has a thickness of 0.05-0.3 mm, each layer of the humidity-control sheets in the humidity-control layer has a thickness of 0.5-2.0 mm, and the lower packaging layer has a thickness of 0.1-0.3 mm.

Furthermore, the lower packaging layer is selected from PET, COP, PES, or PI.

Also provided is a method for preparing a long-acting humidity-control material for battery packs, comprising the following steps:
Step I: dissolving, in part by weight, 15-25 parts of a potassium salt and 5-10 parts of a chloride in 30-50 parts of a solvent, and immersing 3-10 parts of a modified superabsorbent polymer in the above solution for swelling for 4-8 h to allow the salt to uniformly cover the surface of the polymer;
Step II: soaking a substrate in the mixture obtained above for 5-20 s, and drying at 75-95 °C for 5-15 min to give a humidity-control sheet;
Step III: processing the humidity-control sheet into sheets of a certain size through die cutting; and
Step IV: sequentially stacking an upper packaging layer, the humidity-control sheet and a lower packaging layer, and laminating the upper packaging layer and the lower packaging layer by thermocompression to give the long-acting humidity-control material for battery packs.

Furthermore, the preparation of the modified superabsorbent polymer comprises the following steps:
S1: adding, in part by weight, 100-200 parts of a solvent in a glass or polytetrafluoroethylene reactor in a nitrogen atmosphere, adding 17-25 parts of acrylamide, 1-5 parts of methoxypolyethylene glycol maleimide and 2-5 parts of a catalyst, adding 30-45 parts of compound A, stirring the reaction system for 20-40 h at 40-60 °C, and cooling the reaction system to room temperature; and
S2: adding 5-10 parts of 1,3-bis(vinylsulfuryl)propanol, 0.05-0.5 part of vinylferrocene and 1-3 parts of benzoyl peroxide, stirring for 3-8 h at 60-70 °C, filtering at reduced pressure, washing with water and methanol, and drying a solid product in vacuum at 30-80 °C for 6-12 h to give the modified superabsorbent polymer.

Furthermore, the solvent is one, two, or more selected from ethanol, dimethyl sulfoxide, tetrahydrofuran, acetone, and N,N-dimethylformamide.

Furthermore, the catalyst is one, two, or more selected from triphenylphosphine (PPh3), triethylamine, or dipropylamine.

Furthermore, the compound A is selected from ethylene glycol di(3-mercaptopropionate) (GDMP), pentaerythritol tetra(3-mercaptopropionate) (PETMP), pentaerythritol tetramercaptoacetate (PETMA), dipentaerythritol tetra(3-mercaptopropionate), dipentaerythritol tetramercaptoacetate, dipentaerythritol penta(3-mercaptopropionate), dipentaerythritol pentamercaptoacetate, and dipentaerythritol hexa(3-mercaptopropionate).

Furthermore, the long-acting humidity-control material for battery packs has a humidity-control precision of ≤5% and a saturated moisture absorption capacity of ≥200% in a humidity-control range.

Compared with the prior art, the present invention has the following technical advantages:
1. The humidity-control material prepared by the present invention has the advantages of long-term moisture absorption for a prolonged period due to the network spatial structure, massive hydrophilic groups, and excellent porosity of the modified superabsorbent polymer.
2. In the present invention, after the potassium salt and the chloride are dissolved in the solvent to give the solution, solvated ions occupy a part of the area and can lock a part of the water molecules, such that the evaporation and the absorption of the water molecules are hindered, and the humidity-control efficiency of the humidity-control material is improved.

### BRIEF DESCRIPTION OF THE DRAWINGS

In order to more clearly illustrate the technical schemes in the embodiments of the present invention or in the prior art, the drawings required to be used in the description of the embodiments or the prior art are briefly discussed below. It is obvious that the illustrated technical schemes with reference to the drawings in the description below are some embodiments of the present invention, and other embodiments and drawings will be derived by those of ordinary skills in the art from the examples and the drawings provided herein without creative efforts.
FIG. 1 is a schematic view of a container under test according to the present invention,
   wherein: 1, hygro/thermometer; 2, humidity-control material; 3, container under test.
FIG. 2 is a structural schematic view of the humidity-control material of Example 1 of the present invention,
   wherein: 4, waterproof air-permeable film; 5, humidity-adjusting sheet; 6, PET film.

### DETAILED DESCRIPTION

The technical schemes in the examples of the present invention are clearly and completely described below with reference to the drawings, and it is obvious that the described examples are only a part of the embodiments of the present invention, but not all of them. All other embodiments, which can be derived by those of ordinary skills in the art from the examples given herein without the creative efforts, shall fall within the scope of the present invention.

It should be noted that in order to comparatively illustrate the humidity-control performance of the long-acting humidity-control material for battery packs, the thicknesses of the upper packaging layer, the humidity-control, layer and the lower packaging layer of the long-acting humidity-control material for battery packs prepared in the following comparative examples and examples are the same, wherein the thickness of the upper packaging layer is 0.13 mm, the thickness of each humidity-control sheet in the humidity-control layer is 1.1 mm, and the thickness of the lower packaging layer is 0.12 mm.

### Comparative Example 1

A long-acting humidity-control material for battery packs was prepared, which comprised an upper packaging layer, a humidity-control layer, and a lower packaging layer. The upper packaging layer was a waterproof air-permeable film layer, or particularly, a hydrophobic expanded polytetrafluoroethylene film; the humidity-control layer consisted of 3 layers of humidity-control sheets consisting of a substrate and a modified humidity-control macromolecular coating, and the substrate was a polyester fiber.

The method for preparing the long-acting humidity-control material for battery packs comprises the following steps:
Step I: 3 kg of a modified superabsorbent polymer was immersed in 30 kg of ethylene glycol for swelling for 4 h;
Step II: a substrate was soaked in the mixture obtained above for 5 s, and dried at 75 °C for 15 min to give a humidity-control sheet;
Step III: the humidity-control sheet was processed into sheets of a certain size through die cutting; and
Step IV: an upper packaging layer, the humidity-control sheet and a lower packaging layer were sequentially stacked, and the upper packaging layer and the lower packaging layer were laminated by thermocompression to give the long-acting humidity-control material for battery packs.

The preparation of the modified superabsorbent polymer comprises the following steps:
S1: 100 kg of a solvent was added in a glass reactor in a nitrogen atmosphere, 17 kg of acrylamide, 1 kg of methoxypolyethylene glycol maleimide and 2 kg by weight of a catalyst were added, 30 kg of compound A was added, and the reaction system was stirred for 20 h at 40 °C and cooled to room temperature; and
S2: 5 kg of 1,3-bis(vinylsulfuryl)propanol, 0.05 kg of vinylferrocene and 1 kg of benzoyl peroxide were added, the system was stirred for 3 h at 60 °C, filtered at reduced pressure and washed with water and methanol, and the solid product was dried in vacuum at 30 °C for 6 h to give the modified superabsorbent polymer.

The solvent was ethanol.

The catalyst was triphenylphosphine (PPh3).

The compound A was ethylene glycol di(3-mercaptopropionate) (GDNW).

The lower packaging layer was selected from PET.

### Example 1

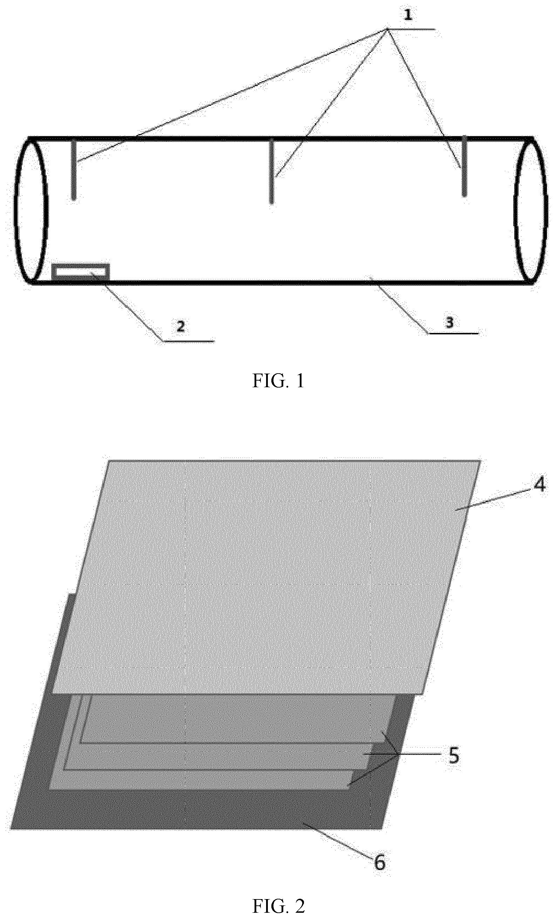

A long-acting humidity-control material for battery packs was prepared, which, as shown in FIG. 2, comprised an upper packaging layer, a humidity-control layer, and a lower packaging layer. The upper packaging layer was a waterproof air-permeable film layer, or particularly, a hydrophobic expanded polytetrafluoroethylene film; the humidity-control layer consisted of 3 layers of humidity-control sheets consisting of a substrate and a modified humidity-control macromolecular coating, and the substrate was a polyester fiber.

The method for preparing the long-acting humidity-control material for battery packs comprises the following steps:
Step I: 15 kg of a potassium salt and 5 kg of a chloride were dissolved in 30 kg of ethylene glycol, and 3 kg of a modified superabsorbent polymer was immersed in the above solution for swelling for 4 h to allow the salt to uniformly cover the surface of the polymer;
Step II: a substrate was soaked in the mixture obtained above for 5 s, and dried at 75 °C for 15 min to give a humidity-control sheet;
Step III: the humidity-control sheet was processed into sheets of a certain size through die cutting; and
Step IV: an upper packaging layer, the humidity-control sheet and a lower packaging layer were sequentially stacked, and the upper packaging layer and the lower packaging layer were laminated by thermocompression to give the long-acting humidity-control material for battery packs.

The preparation of the modified superabsorbent polymer comprises the following steps:
S1: 100 kg of a solvent was added in a glass reactor in a nitrogen atmosphere, 17 kg of acrylamide, 1 kg of methoxypolyethylene glycol maleimide and 2 kg by weight of a catalyst were added, 30 kg of compound A was added, and the reaction system was stirred for 20 h at 40 °C and cooled to room temperature; and
S2: 5 kg of 1,3-bis(vinylsulfuryl)propanol, 0.05 kg of vinylferrocene and 1 kg of benzoyl peroxide were added, the system was stirred for 3 h at 60 °C, filtered at reduced pressure and washed with water and methanol, and the solid product was dried in vacuum at 30 °C for 6 h to give the modified superabsorbent polymer.

The solvent was ethanol.

The catalyst was triphenylphosphine (PPh3).

The compound A was selected from ethylene glycol di(3-mercaptopropionate) (GDNW).

The potassium salt was selected from potassium carbonate; the chloride was selected from sodium chloride.

The lower packaging layer was selected from PET.

### Example 2

A long-acting humidity-control material for battery packs was prepared, which comprised an upper packaging layer, a humidity-control layer, and a lower packaging layer. The upper packaging layer was a waterproof air-permeable film layer, or particularly, a hydrophobic expanded polytetrafluoroethylene film; the humidity-control layer consisted of 3 layers of humidity-control sheets consisting of a substrate and a modified humidity-control macromolecular coating, and the substrate was a polyester fiber.

The method for preparing the long-acting humidity-control material for battery packs comprises the following steps:
Step I: 15 kg of a potassium salt and 6 kg of a chloride were dissolved in 30 kg of deionized water, and 5 kg of a modified superabsorbent polymer was immersed in the above solution for swelling for 5 h to allow the salt to uniformly cover the surface of the polymer;
Step II: a substrate was soaked in the mixture obtained above for 9 s, and dried at 85 °C for 10 min to give a humidity-control sheet;
Step III: the humidity-control sheet was processed into sheets of a certain size through die cutting; and
Step IV: an upper packaging layer, the humidity-control sheet and a lower packaging layer were sequentially stacked, and the upper packaging layer and the lower packaging layer were laminated by thermocompression to give the long-acting humidity-control material for battery packs.

The preparation of the modified superabsorbent polymer comprises the following steps:
S1: 120 kg of a solvent was added in a glass reactor in a nitrogen atmosphere, 19 kg of acrylamide, 2 kg of methoxypolyethylene glycol maleimide and 3 kg by weight of a catalyst were added, 34 kg of compound A was added, and the reaction system was stirred for 25 h at 40 °C and cooled to room temperature; and
S2: 6 kg of 1,3-bis(vinylsulfuryl)propanol, 0.1 kg of vinylferrocene and 1 kg of benzoyl peroxide were added, the system was stirred for 5 h at 60 °C, filtered at reduced pressure and washed with water and methanol, and the solid product was dried in vacuum at 30 °C for 8 h to give the modified superabsorbent polymer.

The solvent was dimethyl sulfoxide.

The catalyst was triethylamine.

The compound A was selected from pentaerythritol tetra(3-mercaptopropionate) (PETMP).

The potassium salt was selected from potassium carbonate; the chloride was selected from calcium chloride.

The lower packaging layer was selected from PET.

### Example 3

A long-acting humidity-control material for battery packs was prepared, which comprised an upper packaging layer, a humidity-control layer, and a lower packaging layer. The upper packaging layer was a waterproof air-permeable film layer, or particularly, a hydrophobic expanded polytetrafluoroethylene film; the humidity-control layer consisted of 3 layers of humidity-control sheets consisting of a substrate and a modified humidity-control macromolecular coating, and the substrate was a polyester fiber.

The method for preparing the long-acting humidity-control material for battery packs comprises the following steps:
Step I: 20 kg of a potassium salt and 6 kg of a chloride were dissolved in 40 kg of ethylene glycol, and 6 kg of a modified superabsorbent polymer was immersed in the above solution for swelling for 6 h to allow the salt to uniformly cover the surface of the polymer;
Step II: a substrate was soaked in the mixture obtained above for 12 s, and dried at 85 °C for 10 min to give a humidity-control sheet;
Step III: the humidity-control sheet was processed into sheets of a certain size through die cutting; and
Step IV: an upper packaging layer, the humidity-control sheet and a lower packaging layer were sequentially stacked, and the upper packaging layer and the lower packaging layer were laminated by thermocompression to give the long-acting humidity-control material for battery packs.

The preparation of the modified superabsorbent polymer comprises the following steps:
S1: 150 kg of a solvent was added in a glass reactor in a nitrogen atmosphere, 21 kg of acrylamide, 3 kg of methoxypolyethylene glycol maleimide and 3 kg by weight of a catalyst were added, 36 kg of compound A was added, and the reaction system was stirred for 26 h at 45 °C and cooled to room temperature; and
S2: 7 kg of 1,3-bis(vinylsulfuryl)propanol, 0.2 kg of vinylferrocene and 2 kg of benzoyl peroxide were added, the system was stirred for 6 h at 65 °C, filtered at reduced pressure and washed with water and methanol, and the solid product was dried in vacuum at 45 °C for 8 h to give the modified superabsorbent polymer.

The solvent was tetrahydrofuran.

The catalyst was dipropylamine.

The compound A was selected from pentaerythritol tetramercaptoacetate (PETMA).

The potassium salt was selected from potassium bromide; the chloride was selected from sodium chloride.

The lower packaging layer was selected from COP.

### Example 4

A long-acting humidity-control material for battery packs was prepared, which comprised an upper packaging layer, a humidity-control layer, and a lower packaging layer. The upper packaging layer was a waterproof air-permeable film layer, or a hydrophobic expanded polytetrafluoroethylene film; the humidity-control layer consisted of 3 layers of humidity-control sheets consisting of a substrate and a modified humidity-control macromolecular coating, and the substrate was a polyester fiber.

The method for preparing the long-acting humidity-control material for battery packs comprises the following steps:
Step I: 20 kg of a potassium salt and 8 kg of a chloride were dissolved in 40 kg of deionized water, and 8 kg of a modified superabsorbent polymer was immersed in the above solution for swelling for 6 h to allow the salt to uniformly cover the surface of the polymer;
Step II: a substrate was soaked in the mixture obtained above for 18 s, and dried at 85 °C for 15 min to give a humidity-control sheet;
Step III: the humidity-control sheet was processed into sheets of a certain size through die cutting; and
Step IV: an upper packaging layer, the humidity-control sheet and a lower packaging layer were sequentially stacked, and the upper packaging layer and the lower packaging layer were laminated by thermocompression to give the long-acting humidity-control material for battery packs.

The preparation of the modified superabsorbent polymer comprises the following steps:
S1: 160 kg of a solvent was added in a glass reactor in a nitrogen atmosphere, 21 kg of acrylamide, 4 kg of methoxypolyethylene glycol maleimide and 4 kg by weight of a catalyst were added, 40 kg of compound A was added, and the reaction system was stirred for 25 h at 50 °C and cooled to room temperature; and
S2: 8 kg of 1,3-bis(vinylsulfuryl)propanol, 0.4 kg of vinylferrocene and 3 kg of benzoyl peroxide were added, the system was stirred for 4 h at 70 °C, filtered at reduced pressure and washed with water and methanol, and the solid product was dried in vacuum at 80 °C for 6 h to give the modified superabsorbent polymer.

The solvent was acetone.

The catalyst was triphenylphosphine (PPh3).

The compound A was selected from dipentaerythritol tetra(3-mercaptopropionate).

The potassium salt was selected from potassium carbonate; the chloride was selected from magnesium chloride.

The lower packaging layer was selected from PES.

### Example 5

A long-acting humidity-control material for battery packs was prepared, which comprised an upper packaging layer, a humidity-control layer, and a lower packaging layer. The upper packaging layer was a waterproof air-permeable film layer, or particularly, a hydrophobic expanded polytetrafluoroethylene film; the humidity-control layer consisted of 5 layers of humidity-control sheets consisting of a substrate and a modified humidity-control macromolecular coating, and the substrate was a polyester fiber.

The method for preparing the long-acting humidity-control material for battery packs comprises the following steps:
Step I: 25 kg of a potassium salt and 8 kg of a chloride were dissolved in 50 kg of ethylene glycol, and 9 kg of a modified superabsorbent polymer was immersed in the above solution for swelling for 7 h to allow the salt to uniformly cover the surface of the polymer;
Step II: a substrate was soaked in the mixture obtained above for 20 s, and dried at 95 °C for 5 min to give a humidity-control sheet;
Step III: the humidity-control sheet was processed into sheets of a certain size through die cutting; and
Step IV: an upper packaging layer, the humidity-control sheet and a lower packaging layer were sequentially stacked, and the upper packaging layer and the lower packaging layer were laminated by thermocompression to give the long-acting humidity-control material for battery packs.

The preparation of the modified superabsorbent polymer comprises the following steps:
S1: 180 kg of a solvent was added in a glass reactor in a nitrogen atmosphere, 24 kg of acrylamide, 5 kg of methoxypolyethylene glycol maleimide and 5 kg by weight of a catalyst were added, 42 kg of compound A was added, and the reaction system was stirred for 35 h at 60 °C and cooled to room temperature; and
S2: 9 kg of 1,3-bis(vinylsulfuryl)propanol, 0.4 kg of vinylferrocene and 3 kg of benzoyl peroxide were added, the system was stirred for 5 h at 70 °C, filtered at reduced pressure and washed with water and methanol, and the solid product was dried in vacuum at 80 °C for 8 h to give the modified superabsorbent polymer.

The solvent was N,N-dimethylformamide.

The catalyst was triethylamine.

The compound A was selected from dipentaerythritol penta(3-mercaptopropionate).

The potassium salt was selected from potassium bromide; the chloride was selected from magnesium chloride.

The lower packaging layer was selected from PI.

### Example 6

A long-acting humidity-control material for battery packs was prepared, which comprised an upper packaging layer, a humidity-control layer, and a lower packaging layer. The upper packaging layer was a waterproof air-permeable film layer, or particularly, a hydrophobic expanded polytetrafluoroethylene film; the humidity-control layer consisted of 5 layers of humidity-control sheets consisting of a substrate and a modified humidity-control macromolecular coating, and the substrate was a polyester fiber.

The method for preparing the long-acting humidity-control material for battery packs comprises the following steps:
Step I: 25 kg of a potassium salt and 10 kg of a chloride were dissolved in 50 kg of deionized water, and 10 kg of a modified superabsorbent polymer was immersed in the above solution for swelling for 8 h to allow the salt to uniformly cover the surface of the polymer;
Step II: a substrate was soaked in the mixture obtained above for 20 s, and dried at 95 °C for 15 min to give a humidity-control sheet;
Step III: the humidity-control sheet was processed into sheets of a certain size through die cutting; and
Step IV: an upper packaging layer, the humidity-control sheet and a lower packaging layer were sequentially stacked, and the upper packaging layer and the lower packaging layer were laminated by thermocompression to give the long-acting humidity-control material for battery packs.

The preparation of the modified superabsorbent polymer comprises the following steps:
S1: 200 kg of a solvent was added in a glass reactor in a nitrogen atmosphere, 25 kg of acrylamide, 5 kg of methoxypolyethylene glycol maleimide and 5 kg by weight of a catalyst were added, 45 kg of compound A was added, and the reaction system was stirred for 40 h at 60 °C and cooled to room temperature; and
S2: 10 kg of 1,3-bis(vinylsulfuryl)propanol, 0.5 kg of vinylferrocene and 3 kg of benzoyl peroxide were added, the system was stirred for 8 h at 70 °C, filtered at reduced pressure and washed with water and methanol, and the solid product was dried in vacuum at 80 °C for 12 h to give the modified superabsorbent polymer.

The solvent was N,N-dimethylformamide.

The catalyst was triphenylphosphine (PPh3).

The compound A was selected from dipentaerythritol pentamercaptoacetate.

The potassium salt was selected from potassium bromide; the chloride was selected from calcium chloride.

The lower packaging layer was selected from PI.

### Example evaluation:

### Humidity-control precision test:

A container under test (diameter: 0.12 m, length: 1.2 m) as shown in FIG. 1 was used. A hygro/thermometer was positioned at each of the head, middle, and tail (at an interval of 0.6 m) for humidity monitoring. The humidity-control materials prepared in Examples 1-6 having dimensions of 95 mm × 135 mm × 3.5 mm were placed at the head or tail of the container in a temperature- and humidity-consistent environment at 45 °C and 95% humidity. The humidities at the three detection points were recorded after 10 h, and the moisture absorption precision of the three detection points was calculated with the minimum value of the three detection points as the reference. The container under test was then placed in a temperature- and humidity-consistent environment at 45 °C and 25% humidity. The humidities at the three detection points were recorded after 10 h, and the moisture release precision of the three detection points was calculated with the minimum value of the three detection points as the reference.

### Moisture absorption capacity test:

The humidity-control materials prepared in Examples 1-6 having dimensions of 95 mm × 135 mm × 3.5 mm were placed at the head or tail of the container in a temperature- and humidity-consistent environment at 45 °C and 95% humidity, and weighed every 1 h to calculate the moisture absorption rate according to the formula: moisture absorption rate = (moistened weight - original weight)/original weight. The saturated moisture absorption rates of the humidity-control materials, i.e., the moisture absorption rate where the weight of the humidity-control material no longer increased in the environment, were recorded.

### Long-acting humidity-control capacity test:

The humidity-control materials prepared in Examples 1-6 having dimensions of 95 mm × 135 mm × 3.5 mm were weighed, and the weight was recorded as m1. The materials were placed in a temperature- and humidity-consistent environment at 35 °C and 85% humidity for 24 h, placed in a temperature- and humidity-consistent environment at 35 °C and 30% humidity for 24 h, and weighed. The weight was recorded as m2. A value was calculated according to the formula: M1 = |m2 - m1|, which was designated as one test period. After 10 test periods, M1, M2, ..., M10 were calculated.

### [Criteria]

If any M value of M1, M2, ..., M10 was < 2 g, the result was determined as "OK";

If any M value of M1, M2, ..., M10 was > 2 g, the result was determined as "NG". The test results are shown in the following table:

**Table 1**

| | Moisture absorption precision% | Moisture release precision% | Moisture absorption capacity% | Long-acting humidity-control capacity M |
|---|---|---|---|---|
| Comparative Example | 12.3 | 13.1 | 105 | NG |
| Example 1 | 4.5 | 4.9 | 225 | OK |
| Example 2 | 4.1 | 4.3 | 230 | OK |
| Example 3 | 4.2 | 4.7 | 245 | OK |
| Example 4 | 3.9 | 4.2 | 255 | OK |
| Example 5 | 3.4 | 4.1 | 260 | OK |
| Example 6 | 3.2 | 3.5 | 265 | OK |

Furthermore, it should be appreciated that although the present invention is described in the form of examples in the specification, every example may include more than one embodiment. Such descriptions are for clarity purposes only. Those skilled in the art will appreciate that the specification should be construed as an entirety and all embodiments in the examples may be combined as appropriate to form other embodiments as will be apparent to those of skill in the art from the description herein.

## Claims

1. A long-acting humidity-control material for battery packs, comprising an upper packaging layer, a humidity-control layer, and a lower packaging layer, wherein the upper packaging layer is a waterproof air-permeable film layer, and the waterproof air-permeable film layer is a hydrophobic expanded polytetrafluoroethylene film; the humidity-control layer consists of 1-5 layers of humidity-control sheets; the humidity-control sheet consists of a substrate and a modified humidity-control macromolecular coating; the substrate is a polyester fiber.

2. The long-acting humidity-control material for battery packs according to claim 1, wherein the modified humidity-control macromolecular coating is prepared from, in part by weight: 3-10 parts of a modified superabsorbent polymer, 15-25 parts of a potassium salt, 5-10 parts of a chloride, and 30-50 parts of a solvent.

3. The long-acting humidity-control material for battery packs according to claim 2, wherein the potassium salt is one or two selected from potassium carbonate and potassium bromide; the chloride is one, two, or more selected from sodium chloride, magnesium chloride, and calcium chloride; the solvent is one or two selected from deionized water and glycol.

4. The long-acting humidity-control material for battery packs according to claim 1, wherein the upper packaging layer has a thickness of 0.05-0.3 mm, each layer of the humidity-control sheets in the humidity-control layer has a thickness of 0.5-2.0 mm, and the lower packaging layer has a thickness of 0.1-0.3 mm.

5. The long-acting humidity-control material for battery packs according to claim 1, wherein the lower packaging layer is selected from PET, COP, PES, or PI.

6. A method for preparing the long-acting humidity-control material for battery packs according to claim 1, comprising the following steps:
step I: dissolving, in part by weight, 15-25 parts of a potassium salt and 5-10 parts of a chloride in 30-50 parts of a solvent, and immersing 3-10 parts of a modified superabsorbent polymer in the solution for swelling for 4-8 h to allow the salt to uniformly cover the surface of the polymer;
step II: soaking a substrate in the mixture obtained in step I for 5-20 s, and drying at 75-95 °C for 5-15 min to give a humidity-control sheet;
step III: processing the humidity-control sheet into sheets of a certain size through die cutting; and
step IV: sequentially stacking an upper packaging layer, the humidity-control sheet and a lower packaging layer, and laminating the upper packaging layer and the lower packaging layer by thermocompression to give the long-acting humidity-control material for battery packs.

7. The method according to claim 6, wherein the preparation of the modified superabsorbent polymer comprises the following steps the following steps:
S 1: adding, in part by weight, 100-200 parts of a solvent in a glass or polytetrafluoroethylene reactor in a nitrogen atmosphere, adding 17-25 parts of acrylamide, 1-5 parts of methoxypolyethylene glycol maleimide and 2-5 parts of a catalyst, adding 30-45 parts of compound A, stirring the reaction system for 20-40 h at 40-60 °C, and cooling the reaction system to room temperature; and
S2: adding 5-10 parts of 1,3-bis(vinylsulfuryl)propanol, 0.05-0.5 part of vinylferrocene and 1-3 parts of benzoyl peroxide, stirring for 3-8 h at 60-70 °C, filtering at reduced pressure, washing with water and methanol, and drying a solid product in vacuum at 30-80 °C for 6-12 h to give the modified superabsorbent polymer;
the compound A is selected from ethylene glycol di(3-mercaptopropionate) (GDMP), pentaerythritol tetra(3-mercaptopropionate) (PETMP), pentaerythritol tetramercaptoacetate (PETMA), dipentaerythritol tetra(3-mercaptopropionate), dipentaerythritol tetramercaptoacetate, dipentaerythritol penta(3-mercaptopropionate), dipentaerythritol pentamercaptoacetate, and dipentaerythritol hexa(3-mercaptopropionate).

8. The method according to claim 7, wherein the solvent is one, two, or more selected from ethanol, dimethyl sulfoxide, tetrahydrofuran, acetone, and N,N-dimethylformamide.

9. The method according to claim 7, wherein the catalyst is one, two, or more selected from triphenylphosphine (PPh3), triethylamine, or dipropylamine.

10. The method according to claim 6, wherein the long-acting humidity-control material for battery packs has a humidity-control precision of ≤5% in a humidity-control range, and a saturated moisture absorption capacity of ≥200%.
